# EUROPÄISCHE PATENTSCHRIFT

(11) **EP 0 601 470 B1**
(45) Veröffentlichungstag und Bekanntmachung des Hinweises auf die Patenterteilung: **06.10.2004**
(21) Anmeldenummer: 93119402.1
(22) Anmeldetag: 02.12.1993
(51) Int. Cl.: C08G 63/668, C08G 18/42

(54) **Polyetheresterole, ein Verfahren zu ihrer Herstellung sowie ihre Anwendung in Polyurethanen**
Polyetheresterols, a process for their preparation and their use in polyurethanes
Polyétheresterols, leur procédé de préparation et leur utilisation dans les polyuréthannes

(30) Priorität: 09.12.1992 DE 4241415
(43) Veröffentlichungstag der Anmeldung: 15.06.1994
(73) Patentinhaber: BASF SCHWARZHEIDE GmbH, 01987 Schwarzheide (DE)
(72) Erfinder: Mueller, Hagen, Gerd, Dr., D-67071 Ludwigshafen (DE); Heinrich, Horst, D-01945 Ruhland (DE); Meyer, Baerbel, D-02991 Lauta (DE)
(74) Vertreter: Abel, Manfred

(56) Entgegenhaltungen:
- EP-A- 0 178 562
- FR-A- 1 214 397
- GB-A- 1 185 418
- GB-A- 2 200 646
- US-A- 4 254 230

## Beschreibung

Die Erfindung betrifft die Verwendung von Polyetheresterolen als fogvermindernde Polyolkomponente für die Herstellung von Polyurethanschäumen.

Polyetheresterole spielen in der Polyurethanchemie eine große Rolle. Ihre Herstellung, meist nach dem Polykondensationsverfahren, sowie ihre Verwendung zur Herstellung von Polyurethan-Kunststoffen sind seit langem bekannt und vielfach beschrieben.

Nach dem bekannten Stand der Technik erfolgt die Herstellung von Ethergruppen enthaltenden Polyesterolen vorwiegend im diskontinuierlichen Chargenbetrieb, wobei Dicarbonsäuren und mehrfunktionelle Ethergruppen enthaltende Alkohole üblicherweise bei Temperaturen > 150°C bei vermindertem Druck und Anwesenheit von Katalysatoren unter Abführung des Kondensats soweit umgesetzt werden, daß Polyetheresterole der gewünschten Hydroxylzahl und minimaler Säurezahl entstehen.

So können beispielsweise gemäß DD-A 113 923 niedrig viskose Polyetheresterole auch durch Veresterung von Polyetherolen, die aus Di- oder Polyolen in Gegenwart von sauren Veretherungskatalysatoren intermediär kondensiert werden, mit Di- oder Polycarbonsäuren hergestellt werden.

Eine weitere Herstellungsmöglichkeit von Polyetheresterolen besteht in der Umsetzung OH-funktioneller Polyether in Gegenwart von Katalysatoren mit epoxidierten natürlichen Fetten und Ölen. Weitere Verfahrensmöglichkeiten bestehen in der Umsetzung von Polycarbonsäuren mit Alkylenoxiden oder in einer Alkoxylierung von Polyesterolen.

Die Verwendung von Polyetheresterolen bei der Herstellung von Polyurethanen erweist sich in vielen Fällen als vorteilhaft gegenüber der Verwendung von reinen Polyetherolen oder reinen Polyesterolen, da Polyetheresterole die vorteilhaften Eigenschaften der Polyetherole, wie gute Verarbeitbarkeit aufgrund niedriger Viskosität sowie gute Hydrolysebeständigkeit der resultierenden Polyurethane, mit denen der Polyesterole, wie gute Oxidations- und Lösungsmittelbeständigkeit, gute Schallabsorption sowie gute Härteeigenschaften der resultierenden Polyurethane, in sich vereinigen, zum anderen werden Verträglichkeitsprobleme, die bei gleichzeitigem Einsatz von Polyetherolen und Polyesterolen auftreten, vermieden.

Daher werden Polyetheresterole, zumeist solche auf der Grundlage von Dicarbonsäuren, vorzugsweise Adipinsäure und Phthalsäure, und Ethergruppen enthaltenden mehrwertigen Alkoholen, wie Diethylenglykol und Dipropylenglykol, in großen Mengen zur Herstellung von Polyurethanen eingesetzt.

Unter den angewendeten Polyetheresterolen nehmen Produkte, bei denen das Verhältnis zwischen Ether- und Estergruppen in etwa 1:2 beträgt, eine besonders bevorzugte Stellung ein. Bei den so aufgebauten Polyetheresterolen wird ein optimales Eigenschaftsniveau, insbesondere beim Einsatz dieser Produkte in Polyurethan-Weichschäumen, erreicht. Die großtechnische Herstellung dieser Produkte erfolgt insbesondere durch die Veresterung von Diethylenglykol und/oder Dipropylenglykol mit Dicarbonsäuren.

Nachteilig an den aus derartigen Polyetheresterolen hergestellten Polyurethanen ist, daß sie einen "Fogging-Effekt" aufweisen. Unter "Fogging-Effekt" wird der Austritt flüchtiger Verbindungen aus Kunststoffen verstanden. Dieser macht sich insbesondere im Automobilbau störend bemerkbar, wenn infolge der Fogentwicklung aus Polyurethanen der Inneneinrichtung die Scheiben beschlagen.

Hier zeigen die bekannten Polyetheresterole die gleichen Nachteile, wie sie von Polyesterolen innerhalb und außerhalb der Polyurethanchemie, z.B. beim Einsatz von Phthalsäure- bzw. Adipinsäurepolyesterolen als Polymerweichmacher, bekannt sind. Diese Produkte enthalten erhebliche Anteile an niedermolekularen Stoffen die unter entsprechenden Bedingungen aus dem Kunststoff entweichen können.

Deshalb wurden bereits einige Methoden zur Beseitigung dieser niedermolekularen Stoffe vorgeschlagen. Gemäß DE-A 38 11 499 erfolgt die Entfernung der niedermolekularen Anteile durch eine Wasserdampfbehandlung der Polyesterole bei 150°C über einen Zeitraum von mindestens 15 Stunden.

Bekannt sind auch die Entfernung von niedermolekularen Verbindungen aus Polyolen durch Vakuumbehandlung bei Temperaturen um 160°C, gegebenenfalls unter Verwendung eines Dünnschichtverdampfers, oder die Extraktion der niedermolekularen Anteile aus dem Polyol mittels organischer Lösungsmittel. Diese Methoden sind jedoch für die Großproduktion von Polyolen zu aufwendig. Ihre industrielle Anwendung würde dazu führen, daß der Hauptvorteil der Polyetheresterole, die breite universelle Nutzung, aus Kostengründen nicht mehr zum Tragen käme.

Der Erfindung liegt die Aufgabe zugrunde, die Fogentwicklung von Polyurethanschäumen, die unter Verwendung von Polyetheresterolen hergestellt werden, zu verringern.

Erfindungsgemäß wird die Aufgabe gelöst durch die Verwendung von Polyetheresterolen, die Kondensationsprodukte sind aus mehrfunktionellen Carbonsäuren, Alkandiolen und Etherdiolen der allgemeinen Formel (I) 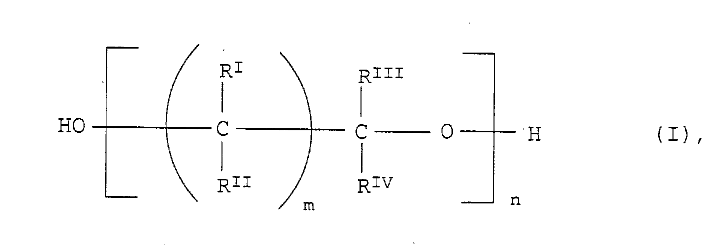 wobei m = 1 bis 3
n ≥ 3 und
R^{I} bis R^{IV} = unabhängig voneinander, gleich oder verschieden, ein Wasserstoffatom und/oder eine C₁- bis C₄-Alkylgruppe bedeuten

und die ein Verhältnis von Ether- zu Estergruppen von 0,3 : 1 bis 1,5 : 1 aufweisen, als fogvermindernde Polyolkomponente für die Herstellung von Polyurethanschäumen durch an sich bekannte Umsetzung mit Isocyanatkomponenten.

Als Alkandiole werden in aller Regel solche mit 2 bis 10 Kohlenstoffatomen eingesetzt. Es können dabei die für die Polyesterolherstellung üblichen Monoglykole, wie Butandiol-1,4, Butandiol-1,3, Hexandiol-1,6, Neopentylglykol, insbesondere jedoch Ethylenglykol und/oder Propylenglykol zum Einsatz kommen.

Als Etherdiole werden bevorzugt Tri- und/oder Polyethylenglykole bis zu einem Molgewicht von 600 und/oder Tri- und/oder Polypropylenglykole bis zu einem Molgewicht von 1000 eingesetzt.

Als Säurekomponenten kommen die zur Herstellung von Polyesterolen üblicherweise verwendeten Carbonsäuren und Carbonsäureanhydride zum Einsatz, beispielsweise Adipinsäure, Phthalsäure oder Phthalsäureanhydrid.

Die Herstellung der erfindungsgemäß verwendeten Polyetheresterole erfolgt im allgemeinen durch Kondensation der mehrwertigen Carbonsäuren mit den im Gegenstand der Erfindung beschriebenen Alkoholkomponenten im diskontinuierlichen Chargenbetrieb bei Temperaturen im Bereich von üblicherweise 160°C bis 260°C, vorzugsweise 220°C bis 240°C.

Zur Verbesserung der Umsetzung können Katalysatoren, bevorzugt Verbindungen des Titans und Zinns, in Mengen bis 1000 ppm eingesetzt werden, beispielsweise Tetrabutylorthotitanat, Zinn(II)-octoat, Zinn(II)-chlorid.

Zur besseren Entfernung des bei der Veresterung entstehenden Wassers sowie leichtflüchtiger Nebenprodukte ist es vorteilhaft, die Umsetzung unter Vakuum im Bereich von 100 bis 10 mbar durchzuführen.

Zur Herstellung der Polyetheresterole ist es vorteilhaft, entweder die Hauptmenge des eingesetzten Alkandiols mit der Säurekomponente vorzukondensieren und anschließend, gegebenenfalls synchron mit dem Anfall an Kondensat, das Etherdiol nachzudosieren oder umgekehrt zu verfahren.

Bei der Herstellung der erfindungsgemäß verwendeten Polyetheresterole werden die Alkoholkomponente, d.h. die Alkandiole und Etherdiole, und die Säurekomponente, d.h. die mehrfunktionelle Carbonsäure, in solchem Verhältnis zueinander eingesetzt, daß das Molverhältnis der OH-Gruppen in der Alkoholkomponente zu den COOH-Gruppen in der Säurekomponente in aller Regel im Bereich von 1,01:1 bis 2:1, vorzugsweise im Bereich von 1,05 : 1 bis 1,1:1 liegt. Das genaue Verhältnis der OH-Gruppen der Alkoholkomponente zu den COOH-Gruppen der Säurekomponente richtet sich in erster Linie nach dem angestrebten Molekulargewicht der Polyetheresterole. Das Verhältnis der Ether- zu Estergruppen im Polyetheresterol ergibt sich durch die Art des eingesetzten Etherdiols, d.h. die Anzahl der Ethergruppen in dem Etherdiol, den Anteil des Etherdiols an der Alkoholkomponente, sowie das Molverhältnis der OH-Gruppen in der Alkoholkomponente zu den COOH-Gruppen in der Säurekomponente. Da die COOH-Gruppen der mehrfunktionellen Carbonsäuren bei der Kondensationsreaktion mit der Alkoholkomponente im wesentlichen vollständig reagieren, läßt sich bei vorgegebenem Etherdiol und Molverhältnis von OH-Gruppen in der Alkoholkomponente zu COOH-Gruppen in der Säurekomponente leicht das notwendige Verhältnis von Alkandiol zu Etherdiol in der Alkoholkomponente ermitteln, das nötig ist, um zu dem gewünschten Verhältnis von Etherzu Estergruppen in den Polyetheresterolen zu gelangen.

Die erfindungsgemäß verwendeten Polyetheresterole lassen sich durch Reaktion mit Isocyanatkomponenten zu Polyurethanschäumen mit verminderter Fogentwicklung umsetzen. Der Einsatz dieser Schäume erfolgt insbesondere für Inneneinrichtungen im Automobilbau.

Als Isocyanatkomponenten kommen dabei insbesondere Toluylendiisocyanat, Diphenylmethandiisocyanat, Isophorondiisocyanat bzw. Isocyanatgruppen enthaltende Umsetzungsprodukte der genannten Verbindungen zur Anwendung. Die Polyurethanherstellung erfolgt üblicherweise, je nach den gewünschten Eigenschaften der Endprodukte, in Anwesenheit von Katalysatoren, Treibmitteln und Hilfsstoffen.

Daß mit den erfindungsgemäß verwendeten Polyetheresterolen die Aufgabe der Erfindung gelöst werden konnte, war überraschend. Der Fachmann hätte vielmehr erwarten müssen, daß z.B. durch Substitution von Diethylenglykol (n=2, Kp=244-247°C) durch ein Gemisch aus Monoethylenglykol (n=1, Kp=197-199°C) und Triethylenglykol (n=3, Kp=282-291°C) in der Struktur des Polyetheresterols eher eine Zunahme des Foganteils infolge des niedriger siedenden Monoethylenglykols auftreten müßte. Es wurde jedoch gefunden, daß ein signifikanter Rückgang des Foganteils nach DIN 75 201 auftrat.

Die Erfindung wird durch die nachstehenden Beispiele näher erläutert.

### Beispiel 1 (Vergleich)

In einem mit Kolonne sowie Temperaturregelung und - kontrolle ausgerüsteten Rührreaktor wurden 91 g Trimethylpropan, 1 167 g Diethylenglyol und 1 158 g Adipinsäure unter Stickstoffatmosphäre 4 Stunden bei Temperaturen von 150°C bis 200°C unter Normaldruck verestert. Anschließend wurde bei einem Druck von 10 mbar und einer Temperatur von 240°C in GEgenwart von 0,08 g Tetrabutylorthotitanat die Reaktion bis zu einer Säurezahl < 2,0 mg KOH/g weitergeführt.

Das so hergestellte Polyetheresterol hatte einen Wassergehalt von 0,2 Gew.-% nach DIN 51 777, eine Säurezahl von 0,5 mg KOH/g nach DIN 53 402, eine Hydroxylzahl von 60,1 mg KOH/g nach DIN 53 240 sowie eine Viskosität von 1010 mPa•s bei 75°C nach DIN 53 015. Dieses Polyesterol wurde mit Toluylendiisocyanat 80/20, einem Gemisch bestehend aus 80 Gew.-% 2,4--Toluylendiisocyanat und 20 Gew.-% 2,6-Toluylendiisocyanat, unter Verwendung von Wasser, Schaumstabilisator und Aktivator zu einem Blockweichschaum der Rohdichte 27 kg/m³ verarbeitet. Die Bestimmung der kondensierbaren Bestandteile nach DIN 75 201 erfolgte unmittelbar nach dem Aufsägen und ergab 6,4 mg.

### Beispiel 2

Unter den im Beispiel 1 angegebenen Bedingungen wurde aus 91 g Trimethylolpropan, 342 g Monoethylenglykol, 825 g Triethylenglykol und 1558 g Adipinsäure ein Polyetheresterol mit einer Säurezahl von 1,4 mg KOH/g, einer Hydroxylzahl von 61,2 mg KOH/g, einem Wassergehalt von 0,03 Gew.-% und einer Viskosität von 945 mPa·s bei 75°C hergestellt.

Ein daraus wie in Vergleichsversuch A hergestellter Blockweichschaum der Rohdichte 27 kg/m² hatte unmittelbar dem Aufschneiden 2,3 mg kondensierbare Bestandteile nach DIN 75 201.

### Beispiel 3

Unter den in Beispiel 1 angegebenen Bedingungen wurden 91 g Trimethylolpropan, 465 g Monoethylenglykol, 703 g Polyethylenglykol mit einem Molekulargewicht von 200 und 1558 g Adipinsäure zu einem Polyetheresterol mit einer Säurezahl von 0,67 mg KOH/g, einer Hydroxylzahl von 57,0 mg KOG/g, einem Wassergehalt von 0,015 Gew.-% und einer Viskosität von 1 050 mPa•s bei 75°C umgesetzt.

Die Ermittlung der kondensierbaren Bestandteile nach DIN 75 201 von aus diesem Polyetheresterol hergestellten Blockweichschaum der Rohdichte 27 [kg/m³] ergab 1,5 mg.

### Beispiel 4

Unter den in Beispiel 1 angegebenen Bedingungen wurden 91 g Trimethylolpropan, 342 g Monoethylenglykol und 1 558 g Adipinsäure verestert. Nach Anfall von etwa 100 g Kondensat wurden 835 g Triethylenglykol zugegeben und weiter bis zum Erreichen der Säurezahl 0,92 mg KOH/g und der Hydroxylzahl von 59,4 mg KOH/g verestert. Das resultierende Polyetheresterol hatte einen Wassergehalt von 0,023 Gew.-% und eine Viskosität von 980 mPa•s bei 75°C.

In einem daraus hergestellten Blockweichschaum der Rohdichte 27 [kg/m³] wurden unmittelbar nach dem Aufsägen 2,4 mg kondensierbare Bestandteile nach DIN 75 201 ermittelt.

### Beispiel 5

Unter den in Beispiel 1 angegebenen Bedingungen wurden 91 g Trimethylolpropan, 825 g Triethylenglykol und 1558 g Adipinsäure verestert. Nach etwa 100 g Kondensatanfall wurden dem Reaktionsgemisch 342 g Monoethylenglykol zudosiert und bis zum Erreichen einer Säurezahl von 1,2 mg KOH/g weiterverestert. Das resultierende Polyetheresterol hatte eine Hydroxylzahl von 61,0 mg KOH/g, einen Wassergehalt von 0,017 Gew.-% und eine Viskosität von 1 000 mPa.s bei 75°C.

Das Polyetheresterol wurde für einen Blockweichschaum der Rohdichte 27 [kg/m³] eingesetzt. Unmittelbar nach dem Aufsägen wurden nach DIN 75 201 2,3 mg kondensierbare Bestandteile ermittelt.

### Beispiel 6 (Vergleich)

Unter den in Beispiel 1 angegebenen Bedingungen wurde aus 1 162 g Dipropylenglykol und 1 118 g Adipinsäure ein Polyetheresterol mit einer Säurezahl von 1,1 mg KOH/g, einer Hydroxylzahl von 57,5 mg KOH/g, einem Wassergehalt von 0,03 Gew.-% und einer Viskosität von 320 mPa•s bei 75°C hergestellt.

Dieses Polyetheresterol wurde in einem Polyurethan-Weichschaum zur Bodenmattenhinterschäumung eingesetzt. Unmittelbar nach dem Aufsägen dieses Weichschaumes wurden nach DIN 75 201 10,8 mg kondensierbare Bestandteile ermittelt.

### Beispiel 7

Unter Unter den in Beispiel 1 angegebenen Bedingungen wurde aus 556 g Monopropylenglykol, 608 g Polypropylenglykol mit einem Molekulargewicht von 450 und 1 118 g Adipinsäure ein Polyetheresterol mit einer Säurezahl von 0,7 mg KOH/g, einer Hydroxylzahl von 53,3 mg KOH/g, einem Wassergehalt von 0,02 Gew.-% und einer Viskosität von 345 mPa•s bei 75°C hergestellt.

Ein daraus hergestellter Weichschaum entsprechend Vergleichsversuch b hatte unmittelbar nach dem Aufsägen einen Gehalt an kondensierbaren Bestandteilen von 4,5 mg nach DIN 75 201.

### Beispiel 8 (Vergleich)

Aus 2 270 g Phthalsäureanhydrid und 2 700 g Diethylenglykol wurde unter den in Vergleichsversuch A genannten Bedingungen ein Polyetheresterol mit einer Säurezahl von 1,4 mg KOH/g, einer Hydroxylzahl von 241 mg KOH/g, einem Wassergehalt von 0,02 Gew.-% und einer Viskosität von 170 mPa.s bei 75°C hergestellt.

Dieses wurde gemeinsam mit Polyisocyanaten zur Herstellung eines halbharten Polyurethanschaumes eingesetzt.

Dieser hatte einen Gehalt an kondensierbaren Bestandteilen von 5,5 mg nach DIN 85 201.

### Beispiel 9

Aus 2 270 g Phthalsäureanhydrid, 790 g Monoethylenglykol und 1 900 g Triethylenglykol wurde ein Polyetheresterol unter den in Vergleichsversuch A genannten Bedingungen hergestellt und in das in Vergleichsversuch C beschriebene Schaumsystem anstelle des in Vergleichsversuch C beschriebenen Polyetheresterols eingesetzt.

Der so hergestellte Schaum hatte einen Anteil an kondensierbaren Bestandteilen von 2,5 mg nach DIN 75 201.

### Beispiel 10

Unter den in Beispiel 1 angegebenen Bedingungen wurden 91 g Trimethylolpropan, 125 g Monoethylenglykol, 1 350 g Triethylenglykol und 1 558 g Adipinsäure zu einem Polyetheresterol mit einer Säurezahl von 1,2 mg KOH/g, einer Hydroxylzahl von 60,2 mg KOG/g, einem Wassergehalt von 0,012 Gew.-% und einer Viskosität von 875 mPa•s bei 75°C umgesetzt.

Die Ermittlung der kondensierbaren Bestandteile nach DIN 75 201 von aus diesem Polyetheresterol hergestellten Blockweichschaum der Rohdichte 27 [kg/m³] ergab 2,1 mg.

### Beispiel 11

Unter den in Beispiel 1 angegebenen Bedingungen wurde aus 385 g Tripropylenglykol, 610 g Monopropylenglykol und 1 315 g Adipinsäure ein Polyetheresterol mit einer Säurezahl von 0,75 mg KOH/g, einer Hydroxylzahl von 57 mg KOH/g, einer Viskosität von 500 mPa•s bei 75°C und einem Wassergehalt von 0,018 Gew.-% hergestellt.

Bei einem aus diesem Polyetheresterol hergestellten Weichschaum analog Vergleichsversuch B ergab die Bestimmung der kondensierbaren Bestandteile nach DIN 75 201 unmittelbar nach dem Aufsägen 6,5 mg.

## Patentansprüche

1. Verwendung von Polyetheresterolen, die Kondensationsprodukte sind aus mehrfunktionellen Carbonsäuren, Alkandiolen und Etherdiolen der allgemeinen Formel (I) 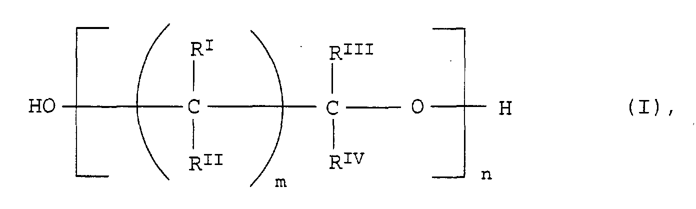 wobei m = 1 bis 3
n ≥ 3 und
R^{I} bis R^{IV} - unabhängig voneinander, gleich oder verschieden, ein Wasserstoffatom oder eine C₁- bis C₄-Alkylgruppe bedeuten,,
und die ein Verhältnis von Ether- zu Estergruppen von 0,3 : 1 bis 1,5 : 1 aufweisen, als fogvermindernde Polyolkomponente für die Herstellung von Polyurethanschäumen durch an sich bekannte Umsetzung mit Isocyanatkomponenten.

## Claims

1. Use of polyetheresterols which are condensation products of polyfunctional carboxylic acids, alkanediols and etherdiols of the general formula (I) 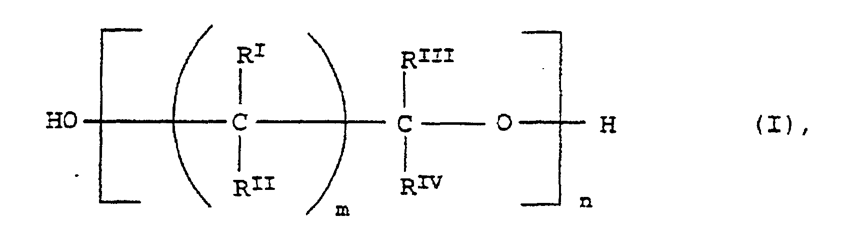 where
m = 1 to 3
n ≥ 3 and
R^{I}, R^{II}, R^{III} and R^{IV} are identical or different and independently hydrogen or C₁- to C₄-alkyl,
and which have a ratio of ether to ester groups in the range from 0.3:1 to 1.5:1, as a fog-reducing polyol component for the production of polyurethane foams by reaction known per se with isocyanate components.

## Revendications

1. Utilisation de polyétherestérols qui sont des produits de condensation d'acides carboxyliques polyfonctionnels, d'alcanediols et d'étherdiols de formule générale (I) 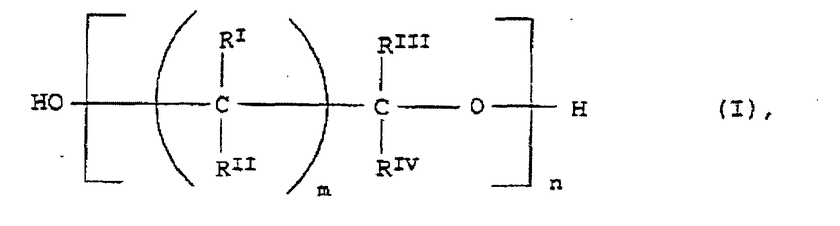 dans laquelle
m = 1 à 3
n ≥ 3 et
R^{I} à R^{IV} sont indépendamment identiques ou différents et représentent un atome d'hydrogène ou un groupe alkyle en C₁-C₄,
et qui présentent un rapport des groupes éther aux groupes ester de 0,3:1 à 1,5:1 en tant que composants polyol réduisant la formation de buée (fogging) pour la préparation de polyuréthanes expansés par une réaction connue en soi avec des composants isocyanate.
